# EUROPÄISCHE PATENTSCHRIFT

(11) **EP 1 771 324 B1**
(45) Veröffentlichungstag und Bekanntmachung des Hinweises auf die Patenterteilung: **03.06.2015**
(21) Anmeldenummer: 05769821.9
(22) Anmeldetag: 21.07.2005
(51) Int. Cl.: B60T 8/88, B60T 7/12, B60T 7/10, B60T 13/74, B60T 17/22

(54) **BREMSVORRICHTUNG FÜR EIN FAHRZEUG MIT ELEKTRISCHER FESTSTELLBREMSANLAGE UND VERFAHREN ZU IHRER STEUERUNG**
BRAKE DEVICE FOR A VEHICLE WITH AN ELECTRIC PARKING BRAKE SYSTEM AND CORRESPONDING CONTROL METHOD
MECANISME DE FREINAGE POUR VEHICULE A SYSTEME DE FREIN DE STATIONNEMENT ELECTRIQUE ET PROCEDE PERMETTANT D'EN ASSURER LA COMMANDE

(30) Priorität: 23.07.2004 DE 102004035962
(43) Veröffentlichungstag der Anmeldung: 11.04.2007
(73) Patentinhaber: Continental Teves AG & Co. oHG, 60488 Frankfurt am Main (DE)
(72) Erfinder: BAIJENS, Mark, 64546 Mörfelden-Walldorf (DE); HUTH, Oliver, 61476 Kronberg (DE); OHLY, Markus, 35423 Lich-Eberstadt (DE); MEURERS, Thomas, 60385 Frankfurt am Main (DE); WISCHER, Patrick, 65824 Schwalbach a. Ts. (DE)
(86) Internationale Anmeldenummer: PCT/EP2005/053543
(87) Internationale Veröffentlichungsnummer: WO 2006/010735

(56) Entgegenhaltungen:
- EP-A- 1 145 927
- EP-A- 1 172 272
- DE-A1- 4 315 877
- DE-A1- 10 041 444
- DE-A1- 19 849 799
- DE-A1- 19 963 763
- US-A- 3 353 634

## Beschreibung

Die Erfindung betrifft eine Bremsvorrichtung für ein Fahrzeug umfassend eine hydraulische Betriebsbremsanlage mit einer Energieversorgungseinheit, die innerhalb eines Hauptbremszylinders der Betriebsbremsanlage einen Bremsdruck nach Maßgabe einer Druckanforderung aufbaut, der an wenigstens eine Radbremse übertragen wird, sowie eine elektrische Feststellbremsanlage.

Die Erfindung betrifft zudem ein Verfahren zur Steuerung der Bremsanlage eines Fahrzeugs, wobei innerhalb eines Hauptzylinders einer hydraulischen Betriebsbremsanlage ein Bremsdruck nach Maßgabe einer Druckanforderung aufgebaut wird, der an wenigstens eine Radbremse übertragen wird.

Kraftfahrzeuge sind in der Regel mit einer hydraulischen Betriebsbremsanlage ausgerüstet, bei der ein Bremsdruck innerhalb eines hydraulischen Mediums in einem Hauptzylinder aufgebaut und an Bremszylinder von Radbremsen übertragen wird, die über Bremsleitungen mit dem Hauptbremszylinder verbunden sind.

Zur Steuerung der Betriebsbremsanlage kommen in modernen Fahrzeugen vermehrt Assistenzfunktionen zum Einsatz, die dem Fahrer die Handhabung des Fahrzeugs erleichtern. Beispiele hierfür sind ein Anfahrassistent (Hill Start Assist, HSA), der ein ungewolltes Zurückrollen des Fahrzeugs bei einem Anfahrvorgang verhindert, oder ein aktives Fahrzeughalten (Active Vehicle Hold, AVH), bei dem das Fahrzeug auch über eine längere Zeitdauer automatisch im Stillstand gehalten wird. Ferner werden beispielsweise auch im Rahmen einer so genannten adaptiven Fahrgeschwindigkeitsregelung (Adaptive Cruise Control, ACC) oder bei einer dynamischen Bremsfunktion, bei der ein Abbremsen des Fahrzeugs von dem Fahrer durch die Betätigung eines Schalters ausgelöst werden kann, Bremsvorgänge automatisch gesteuert.

Die Steuerung der Betriebsbremsanlage des Fahrzeugs erfolgt bei den Assistenzfunktionen nach Maßgabe einer Druckanforderung, die in einem oder mehreren Steuergeräten ermittelt und mittels einer elektronisch gesteuerten Druckversorgung umgesetzt wird.

Dabei besteht die Gefahr, dass die von dem Fahrer erwartete Bremswirkung aufgrund eines Defekts in der Betriebsbremsanlage, wie insbesondere einer Leckage im Hydrauliksystem, nicht erzielt werden kann. Dies kann zu einem unerwünschten Anrollen des Fahrzeugs führen oder zu einer unzureichenden Verzögerung. Ferner besteht auch bei einem Bremsvorgang, der durch den Fahrer gesteuert wird, die Gefahr, dass aufgrund eines Defekts in der Bremsanlage nicht die gewünschte Bremswirkung erzielt werden kann.

Eine Bremsvorrichtung sowie ein Bremsverfahren gemäß dem Oberbegriff der unaabhängigen Ansprüche 1 und 9 ist aus der EP 1 172 272 A1.

Es ist daher eine Aufgabe der Erfindung, die Bremswirkung bei einem Fahrzeug im Falle eines Defekts an der Betriebsbremsanlage zu erhöhen. Insbesondere soll dabei eine Rückfallebene für auf die Betriebsbremsanlage des Fahrzeugs einwirkende Assistenzfunktionen bereitgestellt werden.

Erfindungsgemäß wird diese Aufgabe durch eine Bremsvorrichtung mit den Merkmalen des Patentanspruchs 1 sowie durch ein Verfahren mit den Merkmalen des Patentanspruchs 9 gelöst.

Zweckmäßige Weiterbildungen der Erfindung sind Gegenstand der Unteransprüche.

Nach der Erfindung ist eine Bremsvorrichtung für ein Fahrzeug, umfassend eine hydraulische Betriebsbremsanlage mit einer Energieversorgungseinheit, die innerhalb eines Hauptbremszylinders der Betriebsbremsanlage einen Bremsdruck nach Maßgabe einer Druckanforderung aufbaut, der an wenigstens eine Radbremse übertragen wird, sowie eine elektrische Feststellbremsanlage, so ausgestaltet, während des Betriebs der Betriebsbremsanlage eine Steuerungseinheit anhand eines Vergleichs der Druckanforderung mit dem Bremsdruck in wenigstens einer Radbremse und/oder anhand eines Vergleichs zwischen einer erfassten Fahrzeugbeschleunigung und einer aufgrund der Druckanforderung erwarteten Fahrzeugbeschleunigung des Fahrzeugs überprüft, ob ein Defekt in der Betriebsbremsanlage vorliegt, und dass die Steuerungseinheit die elektrischen Feststellbremsanlage aktiviert, wenn eine Defekt festgestellt wird.

Das erfindungsgemäße Verfahren zur Steuerung der Bremsanlage eines Fahrzeugs, bei dem innerhalb eines Hauptzylinders einer hydraulischen Betriebsbremsanlage ein Bremsdruck nach Maßgabe einer Druckanforderung aufgebaut wird, der an wenigstens eine Radbremse übertragen wird, zeichnet sich dadurch aus, dass während des Betriebs der Betriebsbremsanlage anhand eines Vergleichs der Druckanforderung mit dem Bremsdruck in wenigstens einer Radbremse und/oder anhand eines Vergleichs zwischen einer erfassten Fahrzeugbeschleunigung und einer aufgrund der Druckanforderung erwarteten Fahrzeugbeschleunigung überprüft wird, ob ein Defekt in der Betriebsbremsanlage vorliegt, und dass eine Aktivierung der elektrischen Feststellbremsanlage vorgenommen wird, wenn ein Defekt festgestellt wird.

Die Erfindung stellt somit eine Notfallfunktion bereit, bei der im Falle eines Defekts an der Betriebsbremsanlage die Aktivierung einer elektronischen Feststellbremse des Fahrzeugs erfolgt. Tritt der Defekt dabei während des Stillstands des Fahrzeugs auf, ist es mittels der elektrischen Feststellbremse in der Regel möglich, das Fahrzeug im Falle eines durch den Defekt verursachten Anrollens anzuhalten bzw. den Stillstand des Fahrzeugs aufrechtzuerhalten, so dass Schäden verhindert werden können.

Bei einem Abbremsen bei höheren Geschwindigkeiten hat die Feststellbremse in der Regel nur eine geringe Verzögerungswirkung. Auch in diesen Fällen kann die Bremswirkung jedoch durch eine Aktivierung der Feststellbremse erhöht werden, so dass Schäden bzw. deren Folgen zumindest verringert werden können.

Mit Vorteil erfolgt die Erkennung eines Defekts anhand eines Vergleichs zwischen der Druckanforderung mit dem Bremsdruck in den Radbremsen und/oder anhand eines Vergleichs zwischen einer erfassten Fahrzeugbeschleunigung und einer aufgrund der Druckanforderung erwarteten Beschleunigung, wobei unter dem Begriff Beschleunigung sowohl eine positive Beschleunigung des Fahrzeugs aus dem Stillstand als auch eine Fahrzeugverzögerung während eines Abbremsens zu verstehen ist.

Anhand dieser Vergleiche kann zuverlässig ein Defekt innerhalb der Betriebsbremsanlage erkannt werden. Insbesondere ist es dabei anhand des Vergleichs möglich, eine Leckage in dem Hydrauliksystem der Betriebsbremsanlage festzustellen, für deren Auftreten keine rein elektronisch ausgeführte Rückfallebene realisiert werden kann.

Die Druckanforderung geht in einer zweckmäßigen Ausgestaltung der Bremsvorrichtung und des Verfahrens von wenigstens einem Steuergerät für eine auf die Betriebsbremsanlage einwirkende Assistenzfunktion aus, so dass vorteilhaft eine Rückfallebene für die Assistenzfunktion bereitgestellt wird.

In einer gleichfalls zweckmäßigen Ausgestaltung der Bremsvorrichtung und des Verfahrens geht die Druckanforderung von einem Fahrer des Fahrzeugs aus und wird elektronisch erfasst.

Hierdurch kann auch bei fahrerseitig gesteuerten Bremsvorgängen eine Rückfallebene insbesondere für ein Brake-by-Wire-System realisiert werden.

Bei einer vorteilhaften Ausgestaltung der Bremsvorrichtung und des Verfahrens ist es vorgesehen, dass ein Defekt festgestellt wird, wenn der Bremsdruck in wenigstens einem Radbremszylinder um einen vorgegebenen Wert geringer ist, als der Wert der Druckanforderung.

Bei einer ebenfalls vorteilhaften Ausgestaltung der Bremsvorrichtung und des Verfahrens ist es vorgesehen, dass ein Defekt festgestellt wird, wenn der Bremsdruck in wenigstens einer Radbremse bei einer konstanten Druckanforderung absinkt.

Dabei ist es besonders zweckmäßig, dass ein Defekt festgestellt wird, wenn der Bremsdruckgradient in wenigstens einem Radbremszylinder bei einer konstanten Druckanforderung geringer ist als ein vorgegebener Schwellenwert.

Bei einer weiteren vorteilhaften Ausgestaltung der Bremsvorrichtung und des Verfahrens ist es vorgesehen, dass aus der Druckanforderung eine erwartete Fahrzeugverzögerung ermittelt wird, und ein Defekt festgestellt wird, wenn die tatsächliche Fahrzeugverzögerung um einen vorgegebenen Wert geringer ist als die erwartete Fahrzeugverzögerung.

Bei dieser Ausgestaltung der Erfindung kann insbesondere bei einem Abbremsen des Fahrzeugs ein Defekt innerhalb der Betriebsbremsanlage erkannt werden.

Erfindungsgemäß ist es vorgesehen, dass bei einem durch eine Assistenzfunktion gesicherten Stillstand des Fahrzeugs ein Defekt festgestellt wird, wenn ein Anrollen des Fahrzeugs erkannt wird.

Dabei ist es besonders zweckmäßig, dass ein Anrollen des Fahrzeugs bei einer Veränderung eines Signals eines Radrehzahlsensors und/oder eines Beschleunigungssensors erkannt wird.

In einer bevorzugten Ausführungsform der Bremsvorrichtung und des Verfahrens ist es ferner vorgesehen, dass die Druckanforderung zurückgenommen wird, wenn die elektrische Feststellbremse aktiviert worden ist.

Somit wird die Betriebsbremsanlage außer Funktion gesetzt, wenn im Falle eines Defekts die elektrische Feststellbremse aktiviert ist.

Insbesondere bei einer Leckage in dem Hydrauliksystem kann auf diese Weise ein Verlust von Bremsflüssigkeit verhindert bzw. verringert werden. Ferner wird die Beanspruchung der defekten Bremsanlage minimiert.

Vorzugsweise ist dabei allerdings vorgesehen, dass eine Zurücknahme der Druckanforderung nur bei einem erkannten Stillstand des Fahrzeugs vorgenommen wird, so dass bei einem Abbremsen die verbleibende Bremswirkung der defekten Betriebsbremsanlage genutzt werden kann.

Weitere Vorteile, Besonderheiten und zweckmäßige Weiterbildungen ergeben sich aus den Unteransprüchen und der nachfolgenden Darstellung bevorzugter Ausführungsbeispiele der Erfindung anhand der Figur.

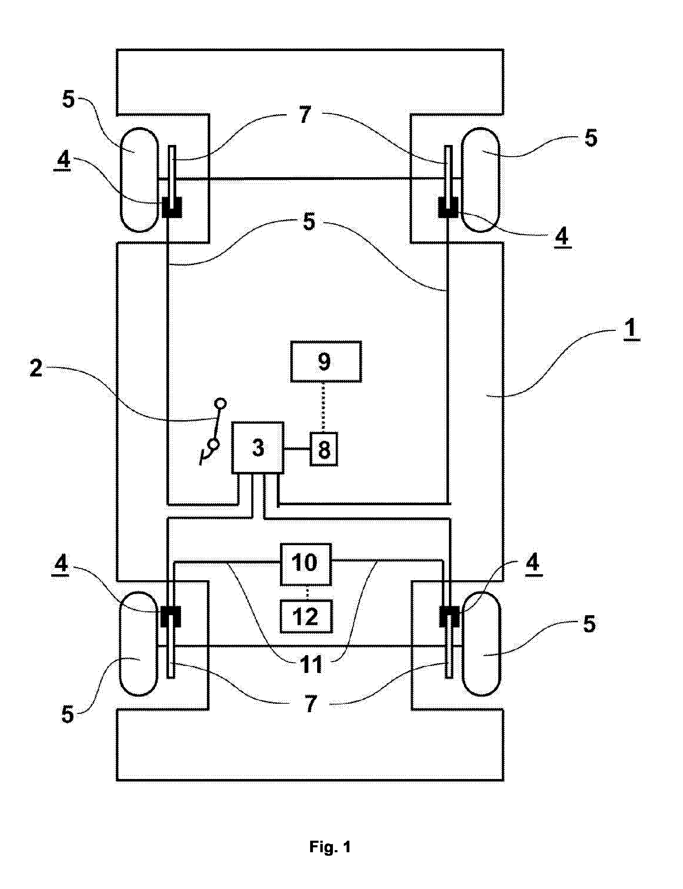

Die Fig. 1 zeigt eine schematische Darstellung der Bremsanlage eines Fahrzeugs.

Die in der Fig. 1 dargestellten Bremsanlage umfasst die hydraulische Betriebsbremsanlage eines Fahrzeugs 1 mit einer Bedieneinrichtung 2, einem Hauptzylinder 3 und je einer Radbremse 4 an den gebremsten Rädern 5 des Fahrzeugs 1, die über einen Radbremszylinder verfügt, der strömungsmäßig über eine Bremsleitung 6 mit dem Hauptbremszylinder 3 verbunden ist.

Die Bedieneinrichtung 2 ist üblicherweise als ein Bremspedal ausgebildet, das von dem Fahrer des Fahrzeugs 1 bedient wird. Bei einem Druck auf das Bremspedal kann dabei von dem Fahrer ein Druck innerhalb einer Bremsflüssigkeit in dem Hauptzylinder 3 aufgebaut werden, der über die Bremsleitungen 6 zu den Radbremsen 4 übertragen wird, wodurch in den Radbremsen 4 ein auf einem Kolben angebrachter Bremsbelag gegen eine Bremsscheibe 7 gedrückt wird.

Bei der Betriebsbremsanlage kann es sich um eine konventionelle mechanische Bremsanlage handeln, bei der die von dem Fahrer bei der Betätigung der Bedieneinrichtung 2 aufgebrachte Kraft von einem Bremskraftverstärker verstärkt wird, um innerhalb des Hauptzylinders 3 einen Bremsdruck aufzubauen. Es kann sich jedoch auch um eine elektro-hydraulische Betriebsbremsanlage handeln, bei der eine Betätigung der Bedieneinrichtung 2 mittels eines Sensors erfasst und nach Maßgabe der Sensorsignale eine elektronisch gesteuerte Druckversorgung 8 für den Hauptzylinder 3 durch ein Steuergerät 9 angesteuert wird, um den Druckaufbau innerhalb des Hauptzylinders 3 vorzunehmen.

Auch bei einem Einsatz einer konventionellen mechanischen Betriebsbremsanlage verfügt diese vorzugsweise über eine elektronisch gesteuerte Druckversorgung 8, die durch ein Steuergerät 9 gesteuert wird. Somit ist es auch bei der konventionellen Bremsanlage möglich, unabhängig von den Vorgaben des Fahrers einen Bremsdruck innerhalb des Hauptzylinders 3 aufzubauen.

In der schematischen Darstellung in der Figur 1 ist dabei lediglich ein einziges Steuergerät 9 gezeigt. Es kann jedoch auch vorgesehen sein, das die Druckversorgung 8 für den Hauptzylinder 3 von verschiedenen Steuergeräten gesteuert wird, oder das weitere Steuergeräte Signale zur Steuerung an ein einziges Steuergerät 9 senden, welches dann die Steuerung der Druckversorgung 8 vornimmt.

Vorzugsweise verfügt die Bremsanlage ferner über elektronisch gesteuerte Ventile zwischen dem Hauptzylinder 3 und den Radbremsen 4 sowie ebenfalls mit elektronisch gesteuerten Ventilen versehene Rückläufe von den Radbremsen 4 zu dem Hauptbremszylinder, so dass, beispielsweise im Rahmen einer ESP-Regelung oder einer ABS-Regelung, eine radindividuelle Steuerung des Bremsdrucks möglich ist.

Die Bremsdrücke innerhalb des Hauptzylinders 3 und der Radbremszylinder werden jeweils mittels eines Drucksensors gemessen. Die Drucksensoren sind dabei in der Figur 1 nicht dargestellt.

Neben der Betriebsbremsanlage verfügt das Fahrzeug 1 über eine elektrische Feststellbremsanlage. Dabei kann es sich um eine elektromechanische Parkbremse handeln, d.h. ein automatisiertes Feststellbremssystem, bei dem der Handbrems- oder Fußfeststellhebel einer konventionellen Feststellbremse durch einen Elektromotor 10 ersetzt wird, der die Seilzüge 11 der Feststellbremse mit einer Zugkraft beaufschlagt, um die Feststellbremse zu aktivieren, wobei die Radbremsen 4 vorzugsweise eine integrierte Feststellbremsfunktion aufweisen.

Es kann sich ebenfalls um eine elektro-hydraulische Feststellbremsanlage handeln, die über eine geeignete elektronisch gesteuerte, mechanisch oder hydraulisch wirkende Aktuatoren aktiviert wird, die sich direkt am Bremssattel einer Radbremse 4 befindet, wodurch insbesondere keine Seilzüge 11 zu den Radbremsen 4 verlegt werden müssen.

Die in der zuvor beschriebenen Weise ausgestaltete Bremsanlage ermöglicht die Bereitstellung verschiedener Assistenzfunktionen, die den Fahrer bei der Bedienung der Bremsanlage unterstützen. Einige derartige Assistenzfunktionen werden dabei im Folgenden beispielhaft dargestellt, wobei die Erfindung keineswegs auf einen Einsatz in Verbindung mit diesen Assistenzfunktionen beschränkt ist.

Bei einem Anfahrassistenten (Hill Start Assist, HSA) wird ein Zurückrollen des Fahrzeugs 1 bei einem Anfahrvorgang verhindert. Dafür wird nach der Aktivierung des Anfahrassistenten, die durch den Fahrer mittels eines Aktivierungssignals vorgenommen wird, eine Druckanforderung durch ein Steuergerät berechnet und ein der Anforderung entsprechender Druck mittels der Druckversorgung 8 und/oder der Ventile zwischen dem Hauptzylinder 3 und den Radbremsen 4 in den Radbremsen 4 eingestellt, um ein ungewolltes Anrollen des Fahrzeugs zu verhindern.

Die Druckanforderung, die einem Druck entspricht, der zur Sicherung des Stillstands des Fahrzeugs ausreichend ist, kann dabei anhand der vorliegenden Steigung und der Fahrzeugmasse ermittelt werden. Dabei kann es vorgesehen sein, das maximale zulässige Gesamtgewicht des Fahrzeugs 1 und das maximal zugelassene Gefälle zugrunde zu legen. Eine weitere Möglichkeit besteht in der dynamischen Ermittlung des Fahrzeuglängsneigungswinkels und/oder der Fahrzeugmassen, wobei der Längsneigungswinkel des Fahrzeugs mit Hilfe eines Längsbeschleunigungssensors oder eine Neigungswinkelsensors bestimmt werden kann. Die Fahrzeugmasse kann beispielsweise bei einem oder mehreren dem Bremsvorgang vorausgehenden Beschleunigungsvorgängen anhand einer Kräftebilanz bestimmt werden, wie es beispielsweise in der deutschen Offenlegungsschrift DE 10 2004 025 637 A1 beschrieben wird. Ebenso lässt sich die Druckanforderung bei dem Anfahrassistenten aus dem Bremsdruck ermitteln, der von dem Fahrer während des Stillstands des Fahrzeugs 1 eingestellt worden ist.

Bei dem Anfahrassistenten wird der Bremsdruck abgebaut, wenn von dem Antriebsmotor des Fahrzeugs 1 über das Getriebe ein Anfahrmoment an den Rädern 5 bereitgestellt wird, das wenigstens so groß ist, dass das Fahrzeug 1 ohne Bremsunterstützung im Stillstand gehalten werden kann.

Während des Stillstands kann das Fahrzeug 1 durch ein aktives Fahrzeughalten (Active Vehicle Hold, AVH) über einen längeren Zeitraum gegen ein ungewolltes Anrollen gesichert werden, indem die Betriebsbremsanlage mit einem Bremsdruck beaufschlagt wird, der ebenfalls nach Maßgabe einer Druckanforderung eingestellt wird, die in einem Steuergerät ermittelt wird.

Bei dieser Funktion wird die Druckanforderung vorzugsweise ebenso wie in einer Ausführungsform der Anfahrhilfe anhand der vorliegenden Steigung und der Fahrzeugmasse so berechnet, dass ein Bremsdruck eingestellt wird, der ausreichend groß ist, um den Stillstand des Fahrzeugs sicherzustellen. Es kann jedoch auch hier vorgesehen sein, die Druckanforderung auf der Grundlage des maximal zulässigen Fahrzeuggewichts und/oder der maximal zulässigen Steigung zu ermitteln.

Die Aktivierung des aktiven Fahrzeughaltens erfolgt beispielsweise aufgrund der Betätigung eines entsprechenden Schalters durch den Fahrer. Die Deaktivierung, d.h. der Abbau des Bremsdrucks in der Betriebsbremsanlage, geschieht entweder in entsprechender Weise durch eine weitere Betätigung des Schalters, oder sie erfolgt bei einem Anfahrvorgang in der gleichen Weise wie bei dem Anfahrassistenten.

Weitere Assistenzfunktionen unterstützen den Fahrer beim Abbremsen des Fahrzeugs 1. Ein Beispiel für eine solche Funktion ist eine dynamische Bremsfunktion, bei der das Abbremsen des Fahrzeugs 1 aufgrund der Betätigung eines Schalters durch den Fahrer erfolgt. Diese Funktion ermöglicht ein Abbremsen des Fahrzeugs 1 in Situationen, in denen die Bedieneinrichtung 2 der Betriebsbremsanlage durch den Fahrer nicht bedient werden kann bzw. defekt ist.

Nach der Aktivierung der dynamischen Bremsfunktion wird der Bremsdruck in der Betriebsbremsanlage mittels der Druckversorgung 8 mit einem hohen Druckaufbaugradienten zwischen 80 bar/s und 120 bar/s, vorzugsweise von 100 bar/s erhöht, um das Fahrzeug 1 möglichst rasch zu verzögern. Bei einem Stillstand des Fahrzeugs 1, der anhand der Signale der Raddrehzahlsensoren erkannt wird, wird der Bremsdruck bis auf einen vorgegebenen Wert reduziert, wobei dieser Wert in der gleichen Weise bestimmt werden kann wie bei dem Anfahrassistenten oder dem aktiven Fahrzeughalten.

Darüber hinaus kann auch im Rahmen einer so genannten ACC-Regelung eine Steuerung der Betriebsbremsanlage vorgenommen werden. Dabei handelt es sich um eine adaptive Fahrgeschwindigkeitsregelung, bei der insbesondere automatisch ein vorgegebener Abstand zu einem vorausfahrenden Fahrzeug eingestellt wird, welches mittels eines Radars erfasst wird.

Falls das vorausfahrende Fahrzeug langsamer ist, erfolgt dabei ein automatischer Druckaufbau in der Betriebsbremsanlage nach Maßgabe einer Druckanforderung, die in einem Steuergerät bestimmt wird. Derzeit arbeiten ACC-Regelungen lediglich oberhalb einer vorgegebenen Mindestgeschwindigkeit, so dass das Fahrzeug bei der ACC-Regelung nicht bis zum Stillstand abgebremst wird. Zudem erfolgt der Druckaufbau nur mit einem begrenzten Druckaufbaugradienten, so dass der Fahrer die Bremsanlage bei einer großen Geschwindigkeitsdifferenz zu dem vorausfahrenden Fahrzeug oder bei geringen Geschwindigkeiten, beispielsweise in einem Verkehrsstau, in der Regel selbst betätigen muss.

Es kann im Rahmen der vorliegenden Erfindung jedoch vorgesehen sein, dass eine ACC-Regelung durchgeführt wird, bei der die Bremsanlage vollständig durch ein Steuergerät gesteuert wird, wobei die Druckanforderung innerhalb des Steuergerätes situationsabhängig bestimmt wird, und die insbesondere auch im niedrigen Geschwindigkeitsbereich vorgenommen wird.

Die Erfindung stellt insbesondere eine Rückfallebene für Assistenzfunktionen bereit, die nach Maßgabe der Druckanforderung eines oder mehrerer Steuergeräte auf die Betriebsbremsanlage einwirken. Die Rückfallebene ist dabei vor allem für den Fall vorgesehen, dass die Druckanforderung des Steuergerätes aufgrund eines Defekts an der Betriebsbremsanlage nicht umgesetzt werden kann, was beispielsweise bei dem Anfahrassistenten oder dem aktiven Fahrzeughalten zu einem ungewollten Anrollen des Fahrzeugs und bei einem durch ein Steuergerät gesteuerten Abbremsen zu einer unzureichenden Verzögerung des Fahrzeugs 1 führen kann.

In vorteilhaften Ausgestaltungen der Erfindung kann die Rückfallebene zudem bei einem Einsatz einer elektro-hydraulischen Betriebsbremsanlage auch bei Bremsvorgängen genutzt werden, die von dem Fahrer gesteuert werden.

Als Defekt kommt dabei insbesondere eine Leckage in dem Hydrauliksystem der Betriebsbremsanlage in Frage, für die keine elektronische Rückfallebene, beispielsweise mittels redundanter Ausführung von Steuergeräten, realisiert werden kann.

Es ist dabei vorgesehen, dass bei einem erkannten Defekt bzw. einer erkannten Leckage in dem Hydrauliksystem eine Aktivierung der elektrischen Feststellbremse erfolgt, um die Bremswirkung zu erhöhen bzw. wiederherzustellen.

Tritt der Defekt dabei während des Stillstands des Fahrzeugs 1 auf, ist es mittels der elektrischen Feststellbremse in der Regel möglich, ein aufgrund des Defekts anrollendes Fahrzeug anzuhalten bzw. den Stillstand des Fahrzeugs aufrechtzuerhalten, so dass Schäden verhindert werden können.

Bei einem Abbremsen bei höheren Geschwindigkeiten hat die Feststellbremse in der Regel nur eine geringe Verzögerungswirkung. Auch in diesen Fällen kann die Bremswirkung jedoch durch eine Aktivierung der Feststellbremse erhöht werden, so dass Schäden bzw. deren Folgen zumindest verringert werden können.

Das Erkennen eines Defekts und insbesondere einer Leckage, das erfindungsgemäß zu einer Aktivierung der elektrischen Feststellbremse führt, kann anhand der Auswertung verschiedener Größen erfolgen, wobei verschiedene, im Folgenden zu beschreibende Bedingungen überprüft werden können. Dabei kann es insbesondere auch vorgesehen sein, dass permanent mehrere oder alle Bedingungen überprüft werden, und die Aktivierung der elektrischen Feststellbremse dann erfolgt, wenn wenigstens eine Bedingung erfüllt ist.

In einer Ausführungsform der Erfindung ist es dabei vorgesehen, dass der in den Radbremsen 4 vorliegende Bremsdruck permanent erfasst und mit dem angeforderten Bremsdruck verglichen wird. Dieser ergibt sich aus der Druckanforderung eines oder mehrerer Steuergeräte zur Bremssteuerung, wobei im Falle mehrerer aktiver Steuergeräte der vorliegende Bremsdruck mit der Summe der Druckanforderung verglichen wird.

Ein Defekt wird in dieser Ausführungsform der Erfindung dann erkannt, wenn der Bremsdruck in wenigstens einer Radbremse 4 während einer vorgegebenen Zeitdauer um wenigstens einen vorgegebenen Wert geringer ist als der angeforderte Bremsdruck. In diesem Fall kann die Druckanforderung nicht umgesetzt werden, wobei insbesondere eine Leckage in dem Hydrauliksystem der Betriebsbremsanlage eine mögliche Ursache hierfür darstellt.

In einer weiteren Ausführungsform der Erfindung werden die Gradienten der Bremsdrücke in den Radbremsen 4 überwacht, nachdem die Druckanforderung eines oder mehrerer Steuergeräte bereits für eine vorgegebene Zeitdauer umgesetzt war, d.h. der angeforderte Bremsdruck für eine vorgegebene Zeitdauer bereits in den Radbremsen 4 vorlag. Die Druckgradienten können dabei aus den Signalen der Drucksensoren in den Radbremsen 4 ermittelt werden.

Ein Defekt wird in dieser Ausführungsform dann erkannt, wenn bei konstanter Druckanforderung der Druckgradient in wenigstens einer Radbremse einen vorgegebenen Schwellenwert unterschreitet, d.h. der Bremsdruck in wenigstens einer Radbremse abfällt, wofür wiederum insbesondere eine Leckage eine mögliche Ursache darstellen kann.

Im Vergleich zu der Überwachung der Bremsdrücke selbst hat die Überwachung des Gradienten dabei den Vorteil, dass ein Defekt schneller erkannt werden kann. Die Gradientenüberwachung zur Defekterkennung ist jedoch nicht anwendbar, wenn der angeforderte Bremsdruck nicht wenigstens kurzzeitig aufgebaut werden konnte und eine Verringerung des Bremsdrucks beobachtet werden kann.

In einer weiteren Ausführungsform der Erfindung, die bei einem sich bewegenden Fahrzeug einsetzbar ist, wird aus der Druckanforderung eines oder mehrerer Steuergeräte eine erwartete Verzögerung berechnet und mit der tatsächlichen Verzögerung des Fahrzeugs verglichen, die aus den Signalen der Raddrehzahlsensoren bestimmt wird. Dabei wird ein Defekt dann erkannt, wenn die tatsächliche Verzögerung um wenigstens einen vorgegebenen Wert geringer ist als die erwartete Verzögerung.

Bei der Berechnung der erwarteten Verzögerung sind die Fahrzeugmasse und der vorliegende Steigungswinkel als Eingangsgrößen zu berücksichtigen. Hier kann es vorgesehen sein, eine Mindestverzögerung aus dem maximal zulässigen Gesamtgewicht des Fahrzeugs 1 bzw. Fahrzeuggespanns und dem maximal zulässigen Gefälle zu ermitteln. Gleichfalls kann es jedoch vorgesehen sein, die Fahrbahnsteigung bzw. das Fahrbahngefälle aus dem Längsneigungswinkel des Fahrzeugs zu ermitteln, der mit Hilfe eines Längsbeschleunigungssensors bestimmt werden kann, und/oder die Masse des Fahrzeugs 1 dynamisch zu bestimmen, wie dies zuvor bereits erläutert worden ist.

Die zuvor beschriebenen Methoden zur Erkennung eines Defekts eignen sich bei einer elektro-hydraulischen Betriebsbremsanlage auch dazu, einen Defekt bei einer fahrerseitigen Bremsensteuerung zu erkennen. Hierfür wird zur Auswertung die ebenfalls als elektronisches Signal vorliegende Druckanforderung des Fahrers zugrunde gelegt.

Bei aktivierter AVH-Funktion, bei welcher der Wagen insbesondere an einer Steigung durch eine automatische Betätigung der Betriebsbremse im Stillstand gehalten wird, kann ein Defekt an der Betriebsbremsanlage zudem anhand eines Anrollens des Fahrzeugs erkannt werden.

Zum Erkennen des Anrollens können dabei insbesondere die Signale der Radrehzahlsensoren ausgewertet werden. Ferner befinden sich auch die gegebenenfalls in dem Fahrzeug 1 vorhandenen Beschleunigungssensoren nach einer kurzen Stillstandszeit im eingeschwungenen Zustand, so dass ein Anrollen des Fahrzeugs 1 auch dann festgestellt wird, wenn bei aktivierter AVH-Funktion ein Ausschlag wenigstens eines Sensorsignals festgestellt wird.

Nachdem ein Defekt an der Betriebsbremsanlage beispielsweise auf eine der zuvor beschriebenen Weisen festgestellt worden ist, wird erfindungsgemäß die elektrische Feststellbremse aktiviert. Dazu wird der Elektromotor 10 durch eine Steuerungseinheit 12 so angesteuert, dass die Feststellbremse zugezogen wird, oder es erfolgt eine entsprechende Ansteuerung der der Feststellbremsfunktion zugeordneten Aktuatoren in den Radbremsen 4.

Ferner wird vorzugsweise eine für den Fahrer sichtbare Warnleuchte angeschaltet, die ihn über den Defekt der Bremsanlage informiert.

Falls der Defekt dabei während eines Stillstands festgestellt worden ist, wird ferner die elektronische Druckanforderung zurückgenommen und die Betriebsbremse somit außer Funktion gesetzt. Bei einem Abbremsen des Fahrzeugs erfolgt die Rücknahme der Druckanforderung vorzugsweise erst, nachdem ein Stillstand des Fahrzeugs festgestellt worden ist, um für das Abbremsen die maximal verfügbare Bremskraft bereitzustellen.

Durch das Abschalten der Betriebsbremsanlage wird dabei insbesondere der Verlust von Bremsflüssigkeit sowie die weitere Beanspruchung des Hydrauliksystems minimiert.

In einer Ausführungsform der Erfindung bleibt die elektrische Feststellbremse solange aktiviert, bis ein Anfahrwunsch des Fahrers erkannt wird, wobei die Erkennung hier ebenso erfolgt, wie dies bei dem Anfahrassistenten vorgesehen ist. Dann wird die elektrischen Feststellbremse automatisch gelöst, um dem Fahrer die Möglichkeit zu geben, das Fahrzeug weiterhin zu bewegen, falls er dies wünscht.

Es kann jedoch ebenfalls vorgesehen sein, dass die elektrische Feststellbremse nur manuell von dem Fahrer durch die Betätigung eines Schalters gelöst werden kann, wodurch der Fahrer noch besser auf die vorliegende Notfallsituation aufmerksam gemacht werden kann.

Wird der Defekt bei einem durch den Fahrer gesteuerten Bremsvorgang erkannt, ist es vorzugsweise vorgesehen, dass die elektrische Feststellbremse gelöst wird, wenn die von dem Fahrer ausgehende Druckanforderung auf den Wert Null sinkt, der auch geschwindigkeitsabhängig vorgegeben werden kann. Auf diese Weise verbleibt die Kontrolle über das Fahrzeug auch in der vorliegenden Notfallsituation vollständig bei dem Fahrer.

Die Warnleuchte wird allerdings in jedem Fall erst dann ausgeschaltet, wenn der Defekt in dem Bremsensystem in einer Werkstatt behoben worden ist.

## Patentansprüche

1. Bremsvorrichtung für ein Fahrzeug (1), umfassend eine hydraulische Betriebsbremsanlage mit einer Energieversorgungseinheit (2; 8), die innerhalb eines Hauptbremszylinders (3) der Betriebsbremsanlage einen Bremsdruck nach Maßgabe einer Druckanforderung aufbaut, der an wenigstens eine Radbremse (4) übertragen wird, sowie eine Feststellbremsanlage (10, 11, 4), wobei während des Betriebs der Betriebsbremsanlage eine Steuerungseinheit (12) überprüft, ob ein Defekt in der Betriebsbremsanlage vorliegt, und wobei die Steuerungseinheit (12) eine elektrische Feststellbremsanlage (10, 11, 4) aktiviert, wenn eine Defekt festgestellt wird,
**dadurch gekennzeichnet, dass** die Druckanforderung von wenigstens einem Steuergerät (9) für eine Assistenzfunktion ausgeht, wobei die Steuerungseinheit (12) anhand eines Vergleichs der Druckanforderung mit dem Bremsdruck in wenigstens einer Radbremse (4) und/oder anhand eines Vergleichs zwischen einer erfassten Fahrzeugbeschleunigung und einer aufgrund der Druckanforderung erwarteten Fahrzeugbeschleunigung des Fahrzeugs überprüft, ob ein Defekt vorliegt, und wobei bei einem durch eine Assistenzfunktion gesicherten Stillstand des Fahrzeugs (1) ein Defekt festgestellt wird, wenn ein Anrollen des Fahrzeugs (1) erkannt wird.

2. Bremsvorrichtung nach einem der vorangegangenen Ansprüche, **dadurch gekennzeichnet, dass** ein Defekt festgestellt wird, wenn der Bremsdruck in wenigstens einer Radbremse (4) um einen vorgegebenen Wert geringer ist als der Wert der Druckanforderung.

3. Bremsvorrichtung nach einem der vorangegangenen Ansprüche, **dadurch gekennzeichnet, dass** ein Defekt festgestellt wird, wenn der Bremsdruck in wenigstens einer Radbremse (4) bei einer konstanten Druckanforderung absinkt.

4. Bremsvorrichtung nach Anspruch 3,
**dadurch gekennzeichnet, dass** ein Defekt festgestellt wird, wenn der Bremsdruckgradient in wenigstens einer Radbremse (4) bei einer konstanten Druckanforderung geringer ist als ein vorgegebener Schwellenwert.

5. Bremsvorrichtung nach einem der vorangegangenen Ansprüche, **dadurch gekennzeichnet, dass** aus der Druckanforderung eine erwartete Fahrzeugverzögerung ermittelt wird, und ein Defekt festgestellt wird, wenn die tatsächliche Fahrzeugverzögerung um einen vorgegebenen Wert geringer ist als die erwartete Fahrzeugverzögerung.

6. Bremsvorrichtung nach einem der vorangegangenen Ansprüche, **dadurch gekennzeichnet, dass** ein Anrollen des Fahrzeugs (1) bei einer Veränderung eines Signals eines Raddrehzahlsensors und/oder eines Beschleunigungssensors erkannt wird.

7. Bremsvorrichtung nach einem der vorangegangenen Ansprüche, **dadurch gekennzeichnet, dass** die Druckanforderung zurückgenommen wird, wenn die elektrische Feststellbremse (10, 11, 4) aktiviert worden ist.

8. Bremsvorrichtung nach Anspruch 7,
**dadurch gekennzeichnet, dass** eine Zurücknahme der Druckanforderung nur bei einem erkannten Stillstand des Fahrzeugs (1) vorgenommen wird.

9. Verfahren zur Steuerung der Bremsanlage eines Fahrzeugs (1), wobei innerhalb eines Hauptzylinders (3) einer hydraulischen Betriebsbremsanlage ein Bremsdruck nach Maßgabe einer Druckanforderung aufgebaut wird, der an wenigstens eine Radbremse (4) übertragen wird, wobei während des Betriebs der Betriebsbremsanlage überprüft wird, ob ein Defekt in der Betriebsbremsanlage vorliegt, und wobei eine Aktivierung der elektrischen Feststellbremsanlage (10, 11, 4) vorgenommen wird, wenn ein Defekt festgestellt wird
**dadurch gekennzeichnet, dass** die Druckanforderung von wenigstens einem Steuergerät (9) für eine auf die Betriebsbremsanlage einwirkende Assistenzfunktion ausgeht, wobei anhand eines Vergleichs der Druckanforderung mit dem Bremsdruck in wenigstens einer Radbremse (4) und/oder anhand eines Vergleichs zwischen einer erfassten Fahrzeugbeschleunigung und einer aufgrund der Druckanforderung erwarteten Fahrzeugbeschleunigung überprüft wird, ob ein Defekt in der Betriebsbremsanlage vorliegt, und wobei bei einem durch eine Assistenzfunktion gesicherten Stillstand des Fahrzeugs (1) ein Defekt festgestellt wird, wenn ein Anrollen des Fahrzeugs (1) erkannt wird.

## Claims

1. Brake device for a vehicle (1), comprising a hydraulic service brake system with an energy supply unit (2; 8) which builds up a brake pressure within a master brake cylinder (3) of the service brake system in accordance with a pressure request, which brake pressure is transmitted to at least one wheel brake (4), and a parking brake system (10, 11, 4), wherein during the operation of the service brake system a control unit (12) checks whether a defect is present in the service brake system, and wherein the control unit (12) activates an electric parking brake system (10, 11, 4) if a defect is detected,
**characterized in that** the pressure request is output by at least one control device (9) for an assistance function, wherein the control unit (12) checks, on the basis of a comparison of the pressure request with the brake pressure in at least one wheel brake (4) and/or on the basis of a comparison between a detected vehicle acceleration and a vehicle acceleration of the vehicle which is anticipated on the basis of the pressure request, whether a defect is present, and wherein in the event of a stationary state of the vehicle (1) which is ensured by an assistance function a defect is detected if it is determined that the vehicle (1) is beginning to roll.

2. Brake device according to the preceding claim, **characterized in that** a defect is detected if the brake pressure in at least one wheel brake (4) is lower than the value of the pressure request by a predefined value.

3. Brake device according to one of the preceding claims, **characterized in that** a defect is detected if the brake pressure in at least one wheel brake (4) drops when there is a constant pressure request.

4. Brake device according to Claim 3, **characterized in that** a defect is detected if the brake pressure gradient in at least one wheel brake (4) is lower than a predefined threshold value when there is a constant pressure request.

5. Brake device according to one of the preceding claims, **characterized in that** an anticipated vehicle deceleration is determined from the pressure request and a defect is detected if the actual vehicle deceleration is lower than the anticipated vehicle deceleration by a predefined value.

6. Brake device according to one of the preceding claims, **characterized in that** it is determined that the vehicle (1) is beginning to roll when there is a change in a signal of a wheel speed sensor and/or an acceleration sensor.

7. Brake device according to one of the preceding claims, **characterized in that** the pressure request is cancelled if the electric parking brake (10, 11, 4) has been activated.

8. Brake device according to Claim 7, **characterized in that** cancellation of the pressure request is carried out only when a stationary state of the vehicle (1) is detected.

9. Method for controlling the brake system of a vehicle (1) wherein a brake pressure is built up within a master cylinder (3) of a hydraulic service brake system in accordance with a pressure request, which brake pressure is transmitted to at least one wheel brake (4), wherein during the operation of the service brake system it is checked whether a defect is present in the service brake system, and wherein the electric parking brake (10, 11, 4) is activated if a defect is detected,
**characterized in that** the pressure request is output by at least one control device (9) for an assistance function which acts on the service brake system, wherein on the basis of a comparison of the pressure request with the brake pressure in at least one wheel brake (4) and/or on the basis of a comparison between a detected vehicle acceleration and a vehicle acceleration which is anticipated on the basis of the pressure request it is checked whether a defect is present in the service brake system, and wherein in the event of a stationary state of the vehicle (1) which is ensured by an assistance function a defect is detected if it is determined that the vehicle (1) is beginning to roll.

## Revendications

1. Dispositif de freinage pour un véhicule (1), comprenant une installation de frein de service hydraulique avec une unité d'alimentation en énergie (2 ; 8) qui établit, à l'intérieur d'un cylindre de freinage principal (3) de l'installation de frein de service, une pression de freinage en fonction d'une demande de pression, laquelle est transmise à au moins un frein de roue (4), ainsi qu'une installation de frein de stationnement (10, 11, 4), une unité de commande (12) contrôlant, pendant le fonctionnement de l'installation de frein de service, si une défaillance existe dans l'installation de frein de service et l'unité de commande (12) activant une installation de frein de stationnement électrique (10, 11, 4) si une défaillance est constatée, **caractérisé en ce que** la demande de pression provient d'au moins un appareil de commande (9) pour une fonction d'assistance, l'unité de commande (12) contrôlant, à l'aide d'une comparaison de la demande de pression avec la pression de freinage dans au moins un frein de roue (4) et/ou à l'aide d'une comparaison entre une accélération détectée du véhicule et une accélération attendue du véhicule, du fait de la demande de pression, si une défaillance existe et en cas d'arrêt du véhicule (1) assuré par une fonction d'assistance, une défaillance étant constatée si l'on détecte que le véhicule (1) roule.

2. Dispositif de freinage selon la revendication précédente, **caractérisé en ce qu'**une défaillance est constatée si la pression de freinage dans au moins un frein de roue (4) est inférieure d'une valeur prédéfinie à la valeur de la demande de pression.

3. Dispositif de freinage selon l'une quelconque des revendications précédentes, **caractérisé en ce qu'**une défaillance est constatée si la pression de freinage dans au moins un frein de roue (4) diminue dans le cas d'une demande de pression constante.

4. Dispositif de freinage selon la revendication 3, **caractérisé en ce qu'**une défaillance est constatée si le gradient de pression de freinage dans au moins un frein de roue (4) est inférieur à une valeur seuil prédéfinie dans le cas d'une demande de pression constante.

5. Dispositif de freinage selon l'une quelconque des revendications précédentes, **caractérisé en ce qu'**à partir de la demande de pression, on détermine un ralentissement attendu du véhicule et une défaillance est constatée si le ralentissement effectif du véhicule est inférieur d'une valeur prédéfinie au ralentissement attendu du véhicule.

6. Dispositif de freinage selon l'une quelconque des revendications précédentes, **caractérisé en ce que** l'on détecte que le véhicule (1) roule dans le cas d'une variation d'un signal d'un capteur de vitesse de rotation de roue et/ou d'un capteur d'accélération.

7. Dispositif de freinage selon l'une quelconque des revendications précédentes, **caractérisé en ce que** la demande de pression est diminuée si le frein de stationnement électrique (10, 11, 4) a été activé.

8. Dispositif de freinage selon la revendication 7, **caractérisé en ce qu'**une diminution de la demande de pression n'est effectuée qu'en cas de détection d'un arrêt du véhicule (1).

9. Procédé de commande de l'installation de freinage d'un véhicule (1), dans lequel à l'intérieur d'un cylindre principal (3) d'une installation de frein de service hydraulique, une pression de freinage est établie en fonction d'une demande de pression, laquelle est transmise à au moins un frein de roue (4), dans lequel pendant le fonctionnement de l'installation de frein de service, on contrôle si une défaillance existe dans l'installation de frein de service et dans lequel une activation de l'installation de frein de stationnement électrique (10, 11, 4) est effectuée si une défaillance est constatée, **caractérisé en ce que** la demande de pression provient d'au moins un appareil de commande (9) pour une fonction d'assistance agissant sur l'installation de frein de service, où, à l'aide d'une comparaison de la demande de pression avec la pression de freinage dans au moins un frein de roue (4) et/ou à l'aide d'une comparaison entre une accélération détectée du véhicule et une accélération attendue du véhicule, du fait de la demande de pression, on contrôle si une défaillance existe dans l'installation de frein de service et en cas d'arrêt du véhicule (1) assuré par une fonction d'assistance, une défaillance est constatée si l'on détecte que le véhicule (1) roule.
